# EUROPEAN PATENT SPECIFICATION

(11) **EP 3 531 769 B1**
(45) Date of publication and mention of the grant of the patent: **18.11.2020**
(21) Application number: 17879463.2
(22) Date of filing: 07.12.2017
(51) Int. Cl.: H04W 72/04

(54) **INFORMATION TRANSMISSION METHOD AND ACCESS NETWORK DEVICE**
INFORMATIONSÜBERTRAGUNGSVERFAHREN UND ZUGRIFFSNETZWERKVORRICHTUNG
PROCÉDÉ DE TRANSMISSION D'INFORMATIONS ET DISPOSITIF DE RÉSEAU D'ACCÈS

(30) Priority: 09.12.2016 CN 201611131177
(43) Date of publication of application: 28.08.2019
(73) Proprietor: Huawei Technologies Co., Ltd., Longgang District Shenzhen, Guangdong 518129 (CN)
(72) Inventor: XIE, Xinqian, Shenzhen, Guangdong 518129 (CN); GUO, Zhiheng, Shenzhen, Guangdong 518129 (CN); SUN, Wei, Shenzhen, Guangdong 518129 (CN)
(74) Representative: Pfenning, Meinig & Partner mbB
(86) International application number: PCT/CN2017/115039
(87) International publication number: WO 2018/103703

(56) References cited:
- EP-A2- 2 309 813
- WO-A1-2010/103048
- WO-A1-2011/018722
- WO-A1-2012/089143
- WO-A1-2015/127618
- CN-A- 101 242 668
- CN-A- 104 113 854
- CN-A- 104 469 961
- US-A1- 2013 012 217
- ZTE: "Consideration on UL Backhaul Resource Configuration and Indication", 3GPP DRAFT; R1-092469_UL BACKHAUL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Los Angeles, USA; 20090623, 23 June 2009 (2009-06-23), XP050350978, [retrieved on 2009-06-23]

## Description

### TECHNICAL FIELD

Embodiments of this application relate to the communications field, and more specifically, to an information transmission method and an access network device.

### BACKGROUND

In a Long Term Evolution (Long Term Evolution, LTE)/Long Term Evolution Advanced (Long Term Evolution Advanced, LTE-A) communications system, a network capacity may be increased through heterogeneous networking. A typical method is that a micro cell (Pico Cell) is configured in a macro cell (Macro Cell). Coverage of a micro base station is within coverage of a macro base station. For example, coverage of a micro evolved NodeB (Pico eNB) is within coverage of a macro evolved NodeB (Marco eNB). When user equipment (User Equipment, UE) is located in the coverage of the micro base station, the user equipment is connected to the micro cell, and the user equipment is referred to as micro-cell user equipment (Pico UE). When user equipment is located outside the coverage of the micro base station but is located within the coverage of the macro base station, the user equipment is connected to the macro cell, and the user equipment is referred to as macro-cell user equipment (Macro UE).

A communications link between the macro base station and the micro base station is referred to as a backhaul link (Backhaul Link). For transmission of the backhaul link, the macro base station and the micro base station need to work together, and both resources of the micro cell and the macro cell need to be occupied. Therefore, the backhaul transmission cannot be performed in all subframes, and is performed in a backhaul subframe used for the backhaul transmission. Otherwise, a network throughput is severely affected.

Therefore, the communications system needs to determine a location of the backhaul subframe, so that the macro base station and the micro base station exchange information in the determined backhaul subframe.

US 2013/0012217 A1 proposes dynamically determining, based on both quality information and traffic information, collected for each of a first link used for direct communication between a first radio terminal and the base station apparatus, a second link used for direct communication between a second radio terminal and a fixed radio relay apparatus, and a third link used for relay transmission between the base station apparatus and the relay apparatus, of sub-frames in a radio frame as radio resources. WO 2010/103048 A1 describes an indication which is received and indicates subframe switching and a subframe undergoing allocation wherein a first portion is allocated to a downlink of a backhaul, a second portion is allocated to a switching time and a third portion of the subframe is allocated to an uplink of a backhaul.

However, in the prior art, a system fixedly preconfigures a location of a backhaul subframe by using higher layer signaling. Regardless of whether a macro base station and a micro base station require backhaul transmission, only backhaul transmission can be performed in the determined backhaul subframe. Consequently, when backhaul transmission is less required, resources are wasted, and network efficiency is reduced.

### SUMMARY

The object of the present invention is achieved by the features of the appended independent claims.

### BRIEF DESCRIPTION OF DRAWINGS

FIG. 1 is a schematic architectural diagram of a heterogeneous network according to an embodiment of this application;
FIG. 2 is a schematic flowchart of an information transmission method according to an embodiment of this application;
FIG. 3 is a schematic structural block diagram of a first subframe according to an embodiment of this application;
FIG. 4 is a schematic structural block diagram of another first subframe according to an embodiment of this application;
FIG. 5 is a schematic structural block diagram of another first subframe according to an embodiment of this application;
FIG. 6 is a schematic block diagram of an access network device for information transmission according to an embodiment of this application;
FIG. 7 is a schematic block diagram of an access network device for information transmission according to another embodiment of this application;
FIG. 8 is a schematic block diagram of an access network device for information transmission according to yet another embodiment of this application; and
FIG. 9 is a schematic block diagram of an access network device for information transmission according to yet another embodiment of this application.

### DESCRIPTION OF EMBODIMENTS

The following describes technical solutions of embodiments in this application with reference to accompanying drawings.

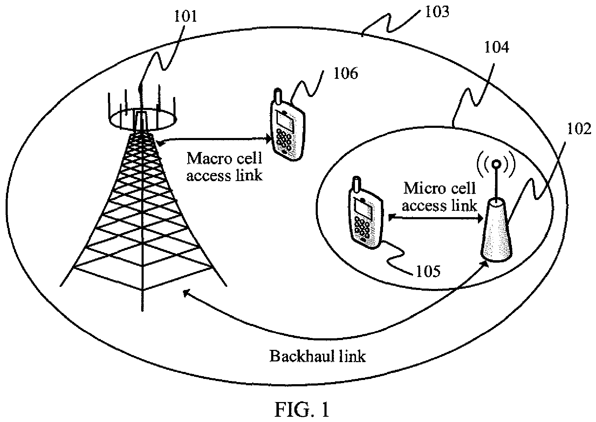

FIG. 1 is a schematic architectural diagram of a heterogeneous network 100 according to an embodiment of this application.

As shown in FIG. 1, the heterogeneous network 100 includes a macro base station 101 and a micro base station 102. Coverage 104 of the micro base station 102 is located within coverage 103 of the macro base station 101. User equipment 105 is located within the coverage 104 of the micro base station 102. User equipment 106 is outside the coverage 104 of the micro base station 102 but is located within the coverage 103 of the macro base station 101. A communications link between the macro base station 101 and the micro base station 102 is referred to as a backhaul link (Backhaul Link).

The macro base station 101 exchanges data and/or signaling with the micro base station 102 over the backhaul link. A backhaul connection may be a wired connection, for example, may be implemented by using an optical fiber, a coaxial cable or a network cable; or may be a radio link, for example, may be implemented by using a millimeter wave or a microwave. The backhaul connection between the macro base station 101 and the micro base station 102 may be implemented by using an X2 interface or a newly-defined X3 interface. A specific implementation form of the backhaul connection is not limited in this embodiment of this application.

In backhaul transmission, the macro base station and the micro base station need to work together, and both resources of the micro cell and the macro cell need to be occupied. Therefore, the backhaul transmission cannot be performed in all subframes. Otherwise, a network throughput is significantly affected.

Therefore, a system needs to determine a subframe location for backhaul transmission, so that the macro base station and the micro base station exchange information in a determined backhaul subframe.

However, in the prior art, a backhaul subframe of the micro base station 102 is fixedly preset. Only backhaul transmission can be performed in the fixedly-preset backhaul subframe. Consequently, when backhaul transmission is less required, resources are wasted, and network efficiency is reduced.

For example, a relay in an LTE system is used as an example, and each frame may be divided into 10 subframes (subframe), as shown in Table 1:

**Table 1 Configuration method of backhaul subframes in a relay**

| Subframe Configuration TDD | eNB-RN uplink -downlink configuration | Subframe number n | | | | | | | | | |
|---|---|---|---|---|---|---|---|---|---|---|---|
| | | 0 | 1 | 2 | 3 | 4 | 5 | 6 | 7 | 8 | 9 |
| 0 | 1 | | | | | D | | | | U | D |
| 1 | | | | | U | | | | | | D |
| 2 | | | | | | D | | | | U | D |
| 3 | | | | | U | D | | | | | D |
| 4 | | | | | U | D | | | | U | D |

The system configures different parameter values by using a higher layer configuration parameter (Subframe Configuration TDD), and determines backhaul subframes. U in this table indicates that the subframe is used for uplink backhaul transmission, and D in this table indicates that the subframe is used for downlink backhaul transmission.

In this embodiment of this application, the macro base station dynamically notifies the micro base station of a location of a subframe in which backhaul transmission is performed, and a subframe structure applicable to the micro base station is provided, to increase the network efficiency.

For convenience of description, FIG. 1 describes only one macro base station and one micro base station. In this embodiment of this application, the heterogeneous network may alternatively include at least one macro base station and at least one micro base station. In addition, one macro base station is not limited to include one micro base station, and may include two or more micro base stations. Optionally, in another embodiment, coverage of a micro base station may alternatively be located in an overlapped area of coverage of a plurality of macro base stations.

It should be understood that, the foregoing heterogeneous system is merely an example of a communications system to which this embodiment of this application may be applied. This embodiment of this application may also be applied to other communications systems, for example, a Long Term Evolution (Long Term Evolution, "LTE" for short) system, a Global System for Mobile Communications (Global System of Mobile communications, GSM) system, a Code Division Multiple Access (Code Division Multiple Access, CDMA) system, a Wideband Code Division Multiple Access (Wideband Code Division Multiple Access, WCDMA) system, a general packet radio service (General Packet Radio Service, GPRS), a 5G communications system, an LTE frequency division duplex (Frequency Division Duplex, FDD) system, an LTE time division duplex (Time Division Duplex, TDD) system, and a Universal Mobile Telecommunications System (Universal Mobile Telecommunication System, UMTS).

An information transmission method provided in the embodiments of this application is applicable to information transmission of a first access network device and a second access network device. It should be understood that the first access network device includes but is not limited to a micro base station in heterogeneous networking, and the second access network device includes but is not limited to a macro base station in the heterogeneous networking.

It should be understood that an access network device in the embodiments of this application may be a network device configured to communicate with a terminal device. The network device may be a base station or a network side device having functions of a base station. For example, the network device may be a base transceiver station (Base Transceiver Station, BTS) in the GSM system or the CDMA system, or may be a NodeB (NodeB, NB) in the WCDMA system, or may be an evolved NodeB (Evolved Node B, eNB or eNodeB) in the LTE system. Alternatively, the network device may be a relay station, an access point, an in-vehicle device, a wearable device, a network side device in a future 5G network, or the like. For another example, the first access network device may include but is not limited to a micro base station, a pico base station (Pico), a femto base station (Femto), a low power node (Low Power Node, LPN), a remote radio head (Remote Radio Head, RRH), or the like.

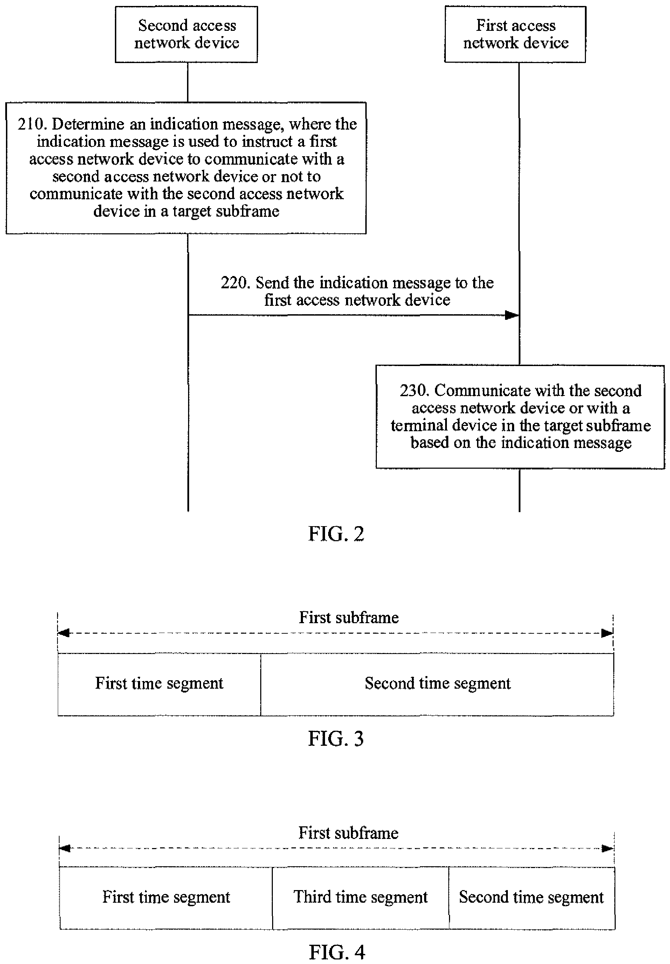

FIG. 2 is a schematic flowchart of an information transmission method 200 according to an embodiment of this application.

210. Determine an indication message, where the indication message is used to instruct a first access network device to communicate with the second access network device or with a terminal device in a target subframe.

Specifically, the second access network device determines the indication message. The indication message is used to instruct the first access network device to communicate with the second access network device or with the terminal device in the target subframe, the target subframe includes at least one of a first subframe and a second subframe, and the first subframe precedes the second subframe. That is, the first access network device may determine, based on the indication message sent by the second access network device, to communicate with the second access network device or with the terminal device in the target subframe.

In this embodiment of this application, the indication message is used to instruct the first access network device to communicate with the second access network device or with the terminal device in the target subframe. In other words, the indication message is used to instruct the first access network device whether to communicate with the second access network device. It should be understood that, communication between the first access network device and the second access network device may also be referred to as transmission over a backhaul link or backhaul transmission. The communication between the first access network device and the second access network device may be wireless transmission, or may be wired transmission. This is not limited in this embodiment of this application.

It should be understood that the indication message may instruct the first access network device to communicate with the second access network device or with the terminal device in the target subframe, and may also indicate other information of the first subframe. This is not limited in this embodiment of this application.

For example, the indication message may also indicate a location of the target subframe to the first access network device. Optionally, the indication message indicates the location of the target subframe in a preconfigured backhaul subframe to the first access network device.

For another example, the indication message may further be used to instruct the first access network device to perform uplink backhaul transmission or downlink backhaul transmission in the target subframe. That is, the first access network device may determine, based on the indication message, that the target subframe is used to receive information sent by the second access network device or to send information to the second access network device.

For another example, the indication message is used to instruct the first access network device not to perform backhaul transmission in the target subframe. Optionally, the first access network device can determine, based on the indication message, that the target subframe is used to receive information sent by the terminal device or to send information to the terminal device.

Therefore, according to the information transmission method provided in the embodiments of this application, the second access network device dynamically schedules the backhaul subframe by using the indication message, to avoid occupation of a same time domain resource when backhaul transmission is more or less required, thereby increasing network efficiency.

Optionally, before the second access network device sends the indication message to the first access network device, the second access network device determines a resource location in which the indication message is sent.

Specifically, before sending the indication message to the first access network device, the second access network device determines the resource location in which the indication message is sent, and sends the indication message by using the resource location. The first access network device may also receive the indication message in the resource location. For example, an LTE system is used as an example, each radio frame is divided into 10 subframes (subframe), and the first subframe and the second subframe are determined as the resource location.

In an embodiment, the second access network device may first determine the resource location information, and then notify the first access network device and micro-cell user equipment of the resource location information.

For example, the second access network device determines the resource location information based on service load information of the first access network device, and sends the resource location information to the first access network device.

It should be understood that the second access network device may alternatively determine the resource location information based on other information of the first access network device, for example, transmission rate information of the first access network device. This is not specifically limited in this embodiment of this application.

Optionally, the second access network device sends Radio Resource Control protocol (Radio Resource Control, RRC) signaling to the first access network device. The RRC signaling includes the resource location information, so that the first access network device receives the resource location information in the RRC signaling sent by the second access network device.

It should be understood that the second access network device may send the resource location information to the first access network device by using the RRC signaling, or may send the resource location information to the first access network device by using another semi-static configuration method. This is not limited in this embodiment of this application.

It should further be understood that the second access network device may simultaneously notify the first access network device and user equipment of the first access network device of the resource location information, or may first notify the first access network device of the resource location information, and then the first access network device notify the micro-cell user equipment.

In another embodiment, in initial configuration, a communications system preconfigures resource location information for transmission of the indication message, and the second access network device, the first access network device, and the micro-cell user equipment may all learn of the resource location in advance.

In other words, the communications system preconfigures the resource location information of the indication message in initial configuration information, and the second access network device may determine the resource location information based on the initial configuration information of the system. The first access network device may alternatively determine the resource location information based on the initial configuration information of the system.

In this embodiment of this application, the indication message may be an indication message of a first time segment in the first subframe, and is used to indicate whether a second time segment of the first subframe is used to perform backhaul transmission. The indication message may alternatively be an indication message in the second subframe, and is used to indicate whether the second time segment of the first subframe is used to perform backhaul transmission.

It should be understood that the resource location information of the indication message in this embodiment of this application may include location information of the second subframe, location information of the first subframe, and/or symbol information of the first time segment.

Optionally, the location information of the first subframe includes a transmission cycle and/or a subframe location.

Optionally, the symbol information of the first time segment includes a quantity of symbols and/or a symbol location.

Therefore, according to the information transmission method provided in the embodiments of this application, the second access network device sends the indication message to the first access network device in the determined resource location, dynamically schedules the first subframe used as the target subframe for backhaul transmission, so that when backhaul transmission is less required, occupation of a same time domain resource is avoided, thereby increasing the network efficiency.

In addition, different duplex modes of an LTE/LTE-A communications system may be mainly classified into a frequency division duplex (Frequency Division Duplex, FDD) mode and a time division duplex (Time Division Duplex, TDD) mode. For a wireless communications system operating in the TDD mode, in a period of time, an entire frequency band of an area is limited to only downlink transmission or for only uplink transmission. In addition, for an area covered by a same frequency band, all cells in the area need to perform downlink transmission or uplink transmission. However, a dynamic TDD mode will be introduced to a next-generation wireless communications system. To be specific, uplink and downlink transmission may be flexibly configured in each subframe. A fixed backhaul subframe affects flexibility of the dynamic TDD mode.

According to the information transmission method provided in the embodiments of this application, by using the indication message, the first access network device is dynamically instructed to communicate with the second access network device or with the terminal device in the target subframe. In addition, the information transmission method can be applied to a TDD system and a dynamic TDD system that have a fixed configuration each.

As shown in FIG. 2, after the second access network device determines the indication message, the method includes the following step:

220. Send the indication message to the first access network device.

Specifically, the second access network device sends the indication message to the first access network device in the first time segment of the first subframe, so that the first access network device determines a type of the target subframe based on the indication message.

Optionally, the second access network device may notify the first access network device of the indication message by using physical layer control signaling.

Optionally, the physical layer control signaling may be physical downlink control channel (Physical Downlink Control Channel, PDCCH) signaling.

It should be understood that the indication message in this embodiment of this application may be notified to the first access network device through a downlink control channel or in another explicit or implicit manner. This is not limited in this embodiment of this application.

As shown in FIG. 2, after the first access network device receives the indication message sent by the second access network device, the method includes the following step:

230. Communicate with the second access network device or with the terminal device in the target subframe based on the indication message.

Specifically, in the first time segment of the first subframe, the first access network device receives the indication message sent by the second access network device. The indication message is used to instruct the first access network device to communicate with the second access network device or with the terminal device in the target subframe, the target subframe includes at least one of the first subframe and the second subframe, and the first subframe precedes the second subframe. The first access network device communicates with the second access network device or with the terminal device in the target subframe based on the indication message.

FIG. 3 to FIG. 5 are schematic structural block diagrams of a first subframe according to embodiments of this application. The following provides description with reference to the accompanying drawings.

In an embodiment, optionally, as shown in FIG. 3, in a first time segment of the first subframe, a first access network device receives an indication message sent by a second access network device. The first time segment precedes the second time segment.

Specifically, the first access network device may determine, based on the indication message received in the first time segment of the first subframe, whether to communicate with the second access network device or with a terminal device in the second time segment of the first subframe.

Optionally, when the first access network device sends, in the second time segment, information, as shown in FIG. 4, the first subframe further includes a third time segment. The third time segment is between the first time segment and the second time segment, and is used to switch the first access network device from a receiving state to a sending state.

In other words, when the first access network device sends, in the second time segment, the information to the terminal device or the second access network device, that is, when the second time segment is used for uplink backhaul transmission or downlink access transmission, the first subframe further includes the third time segment.

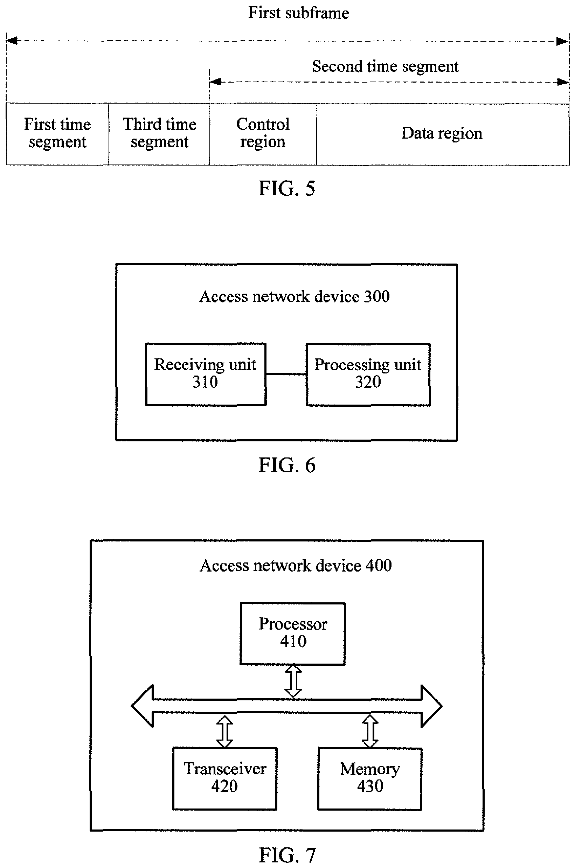

Optionally, when the first access network device sends, in the second time segment, the information to the terminal device, that is, when the second time segment is used for downlink access transmission, as shown in FIG. 5, the second time segment includes a control region and a data region. The first access network device sends control information to the terminal device in the control region. The control information is used to instruct the terminal device to receive data information in the data region.

Therefore, according to the information transmission method provided in the embodiments of this application, the first access network device receives, in the first time segment of the first subframe, the indication message sent by the second access network device, and can determine whether backhaul transmission or micro cell access transmission is performed in the second time segment of the first subframe, to avoid occupation of a same time domain resource when backhaul transmission is less required, thereby increasing network efficiency.

In another embodiment, optionally, the indication message is used to instruct the first access network device to communicate with the second access network device or with the terminal device in the second subframe.

It should be understood that FIG. 3 to FIG. 5 schematically show structures of the first subframe in the embodiments of this application. The structure of the first subframe may be in another form. This is not limited in this embodiment of this application.

Therefore, according to the information transmission method provided in the embodiments of this application, the first access network device can determine, based on the indication message sent by the second access network device, whether backhaul transmission or micro cell access transmission is performed in the target subframe, to avoid occupation of a same time domain resource when backhaul transmission is less required, thereby increasing the network efficiency.

The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

FIG. 6 is a schematic block diagram of an access network device 300 for information transmission according to an embodiment of this application. As shown in FIG. 6, the access network device 300 includes:
a receiving unit 310, configured to receive, in a first time segment of a first subframe, an indication message sent by a second access network device, where the indication message is used to instruct a processing unit 320 to communicate with the second access network device or with a terminal device in a target subframe, the target subframe includes at least one of the first subframe and a second subframe, and the first subframe precedes the second subframe; and
communicating, by the processing unit 320, with the second access network device or with the terminal device in the target subframe based on the indication message.

It should be understood that the indication message may instruct a first access network device to communicate with the second access network device or with the terminal device in the target subframe, and may also indicate other information of the first subframe. This is not limited in this embodiment of this application.

For example, the indication message may also indicate a location of the target subframe to the first access network device. Optionally, the indication message indicates a location of the target subframe in a preconfigured backhaul subframe to the first access network device.

For another example, the indication message may further be used to instruct the first access network device to send, in the target subframe, information to the second access network device or receive, in the target subframe, information sent by the second access network device. That is, the first access network device may determine, based on the indication message, that the target subframe is used to receive the information sent by the second access network device or to send the information to the second access network device.

For another example, the indication message is used to instruct the first access network device not to perform backhaul transmission in the target subframe. Optionally, the first access network device can determine, based on the indication message, that the target subframe is used to receive information sent by the terminal device or to send information to the terminal device.

Therefore, according to the information transmission method provided in the embodiments of this application, the second access network device dynamically schedules the backhaul subframe by using the indication message, to avoid occupation of a same time domain resource when backhaul transmission is more or less required, thereby increasing network efficiency.

Optionally, the receiving unit 310 is specifically configured to receive, in the first time segment, physical downlink control channel PDCCH signaling sent by the second access network device. The PDCCH signaling includes the indication message.

It should be understood that the indication message in this embodiment of this application may be notified to the first access network device through a downlink control channel or in another explicit or implicit manner. This is not limited in this embodiment of this application.

Optionally, the indication message is used to instruct the processing unit to communicate with the second access network device or with the terminal device in a second time segment of the first subframe. The first time segment precedes the second time segment.

Optionally, when the second time segment is used to send information to the terminal device or the second access network device, the first subframe further includes a third time segment. The third time segment is between the first time segment and the second time segment, and is used to switch the processing unit from a receiving state to a sending state.

Optionally, when the second time segment is used to send information to the terminal device, the second time segment includes a control region and a data region. The processing unit sends control information to the terminal device in the control region. The control information is used to instruct the terminal device to receive data information.

Optionally, the indication message is used to instruct the processing unit to communicate with the second access network device or with the terminal device in the second subframe.

Optionally, the processing unit 320 is further configured to determine location information of the first subframe and/or symbol information of the first time segment before the processing unit receives, in the first time segment of the first subframe, the indication message sent by the second access network device.

Optionally, the receiving unit 310 is further configured to receive Radio Resource Control protocol RRC signaling sent by the second access network device. The RRC signaling includes the location information of the first subframe and/or the symbol information of the first time segment. The processing unit 330 is specifically configured to determine the location information of the first subframe and/or the symbol information of the first time segment based on the RRC signaling.

Optionally, the processing unit 330 is specifically configured to determine location information of the first subframe and/or symbol information of the first time segment based on preconfigured information.

Optionally, the symbol information of the first time segment includes a quantity of symbols and/or a symbol location.

Optionally, the location information of the first subframe includes a transmission cycle and/or a subframe location.

It should be understood that, the access network device 300 according to this embodiment of this application may correspond to the first access network device in the method embodiment in embodiments of this application, and operations and/or functions of the modules and another module in the access network device 300 are used for implementing corresponding procedures of the method 200. Details are not described herein again.

It should be noted that in this embodiment of this application, the receiving unit 310 may be implemented by a transceiver, and the processing unit 320 may be implemented by a processor. As shown in FIG. 7, an access network device 400 may include a processor 410, a transceiver 420, and a memory 430. The memory 430 may be configured to store indication information, or may be configured to store code, an instruction, and the like that are to be executed by the processor 410.

Components of the access network device 400 are connected to each other by using a bus system. In addition to a data bus, the bus system further includes a power supply bus, a control bus, and a status signal bus.

The access network device 400 shown in FIG. 7 or the access network device 300 shown in FIG. 6 can implement each process implemented by the first access network device in the method embodiment shown in FIG. 2. To avoid repetitions, details are not described herein again.

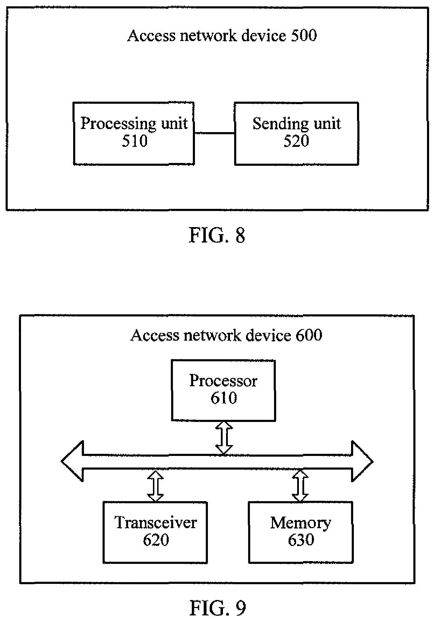

FIG. 8 is another schematic block diagram of an access network device 500 for information transmission according to an embodiment of this application. As shown in FIG. 7, the access network device 500 includes:
a processing unit 510, configured to determine an indication message, where the indication message is used to instruct a first access network device to communicate with a second access network device or with a terminal device in a target subframe, the target subframe includes at least one of a first subframe and a second subframe, and the first subframe precedes the second subframe; and
a sending unit 520, configured to send the indication message to the first access network device in a first time segment of the first subframe.

It should be understood that the indication message may instruct the first access network device to communicate with the second access network device or with the terminal device in the target subframe, and may also indicate other information of the first subframe. This is not limited in this embodiment of this application.

For example, the indication message may also indicate a location of the target subframe to the first access network device. Optionally, the indication message indicates a location of the target subframe in a preconfigured backhaul subframe to the first access network device.

For another example, the indication message may further be used to instruct the first access network device to send, in the target subframe, information to the second access network device or receive, in the target subframe, information sent by the second access network device. That is, the first access network device may determine, based on the indication message, that the target subframe is used to receive the information sent by the second access network device or to send the information to the second access network device.

For another example, the indication message is used to instruct the first access network device not to perform backhaul transmission in the target subframe. Optionally, the first access network device can determine, based on the indication message, that the target subframe is used to receive information sent by the terminal device or to send information to the terminal device.

Therefore, according to the information transmission method provided in the embodiments of this application, the second access network device dynamically schedules the backhaul subframe by using the indication message, to avoid occupation of a same time domain resource when backhaul transmission is more or less required, thereby increasing network efficiency.

Optionally, the sending unit 520 is specifically configured to receive, in the first time segment, PDCCH signaling sent by the first access network device. The PDCCH signaling includes the indication message.

Optionally, the indication message is used to instruct the first access network device to communicate with the second access network device or with the terminal device in a second time segment of the first subframe. The first time segment precedes the second time segment.

Optionally, when the second time segment is used to send information to the terminal device or the second access network device, the first subframe further includes a third time segment. The third time segment is between the first time segment and the second time segment, and is used to switch the first access network device from a receiving state to a sending state.

Optionally, when the second time segment is used to send information to the terminal device, the second time segment includes a control region and a data region. The first access network device sends control information to the terminal device in the control region. The control information is used to instruct the terminal device to receive data information.

Optionally, the indication message is used to instruct the first access network device to communicate with the second access network device or with the terminal device in the second subframe.

Optionally, the indication message is used to instruct the first access network device to send, in the target subframe, information to the second access network device or receive, in the target subframe, information sent by the second access network device.

Optionally, the processing unit 510 is further configured to determine location information of the first subframe and/or symbol information of the first time segment before the sending unit sends the indication message to the first access network device.

Optionally, the processing unit 510 is specifically configured to determine location information of the first subframe and/or symbol information of the first time segment based on preconfigured information.

Optionally, the processing unit 510 is specifically configured to determine location information of the first subframe and/or symbol information of the first time segment based on service load information of the first access network device.

Optionally, the sending unit 520 is further configured to send Radio Resource Control protocol RRC signaling to the first access network device. The RRC signaling includes the location information of the first subframe and/or the symbol information of the first time segment.

Optionally, the symbol information of the first time segment includes a quantity of symbols and/or a symbol location.

Optionally, the location information of the first subframe includes a transmission cycle and/or a subframe location.

It should be noted that in this embodiment of this application, the processing unit 510 may be implemented by a processor, and the sending unit 520 may be implemented by a transceiver. As shown in FIG. 9, an access network device 600 may include a processor 610, a transceiver 620, and a memory 630. The memory 630 may be configured to store indication information, or may be configured to store code, an instruction, and the like that are to be executed by the processor 610.

Components of the access network device 600 are connected to each other by using a bus system. In addition to a data bus, the bus system further includes a power supply bus, a control bus, and a status signal bus.

The access network device 600 shown in FIG. 9 or the access network device 500 shown in FIG. 8 can implement each process implemented by the second access network device in the method embodiment shown in FIG. 2. To avoid repetitions, details are not described herein again.

An embodiment of this application further provides a system. The system includes a first access network device and a second access network device. The first access network device may correspond to the access network device 400 shown in FIG. 7 or the access network device 300 shown in FIG. 6, and the second access network device may correspond to the access network device 600 shown in FIG. 9 or the access network device 500 shown in FIG. 8. The foregoing functions and other functions of the modules in the system are for implementation of corresponding procedures of the method 200. For brevity, details are not described herein again.

In an implementation process, the foregoing modules can be implemented by using a hardware integrated logical circuit in the processor, or by using instructions in a form of software. Alternatively, the foregoing modules can be directly embodied in hardware executed by a processor, or may be implemented by a combination of hardware and a software module that are in the processor. The software module may be located in a mature storage medium in the art, such as a random access memory, a flash memory, a read-only memory, a programmable read-only memory, an electrically erasable programmable memory, a register, or the like. The storage medium is located in the memory, and the processor executes instructions in the memory and completes the steps corresponding to the method 200 in combination with hardware of the processor. To avoid repetition, details are not described herein again.

A person of ordinary skill in the art may be aware that, in combination with the examples described in the embodiments disclosed in this specification, method steps and units may be implemented by electronic hardware, computer software, or a combination thereof. To clearly describe the interchangeability between the hardware and the software, the foregoing has generally described steps and compositions of each embodiment according to functions. Whether the functions are performed by hardware or software depends on particular applications and design constraint conditions of the technical solutions. A person of ordinary skill in the art may use different methods to implement the described functions for each particular application, but it should not be considered that the implementation goes beyond the scope of the invention as specified in the claims.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected, based on actual requirements, to achieve the objectives of the solutions of the embodiments in this application.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the embodiments of this application essentially, or the part contributing to the prior art, or all or some of the technical solutions may be implemented in the form of a software product. The software product is stored in a storage medium and includes several instructions for instructing a computer device (which may be a personal computer, a server, an access network device, or the like) to perform all or some of the steps of the methods described in the embodiments of this application embodiments. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of the embodiments of this application, but are not intended to limit the protection scope of the claims.

## Claims

1. A communication method, comprising:
receiving (220), by a first access network device, an indication message sent by a second access network device, wherein the indication message is used to instruct the first access network device to communicate with the second access network device or with a terminal device in a target subframe, the target subframe comprises a first subframe ; and
communicating (230), by the first access network device, with the second access network device or with the terminal device in the target subframe based on the indication message,
**characterized in that**
the indication message sent by the second access network device is received by the first access network device in a first time segment of the first subframe wherein the indication message is used to instruct the first access network device to communicate with the second access network device or with a terminal device in a second time segment of the first subframe, wherein the first time segment of the first subframe precedes the second time segment of the first subframe.

2. The method according to claim 1, wherein the receiving (220), by a first access network device, an indication message sent by a second access network device comprises:
receiving, by the first access network device in the first time segment, physical layer control signaling sent by the second access network device, wherein the physical layer control signaling comprises the indication message.

3. The method according to claim 1 or 2, wherein the first subframe further comprises a third time segment, and the third time segment is between the first time segment and the second time segment and is used to switch the first access network device from a receiving state to a sending state and, optionally,
wherein the second time segment comprises a control region and a data region, the first access network device sends control information to the terminal device in the control region, and the control information is used to instruct the terminal device to receive data information.

4. The method according to any one of claims 1, 2, and 3, wherein the indication message is used to instruct the first access network device to send, in the target subframe, information to the second access network device or receive, in the target subframe, information sent by the second access network device.

5. The method according to any one of claims 1 to 4, wherein before the receiving, by a first access network device in a first time segment of a first subframe, an indication message sent by a second access network device, the method further comprises:
determining, by the first access network device, location information of the first subframe and/or symbol information of the first time segment.

6. A communication method, comprising:
determining (210), by a second access network device, an indication message, wherein the indication message is used to instruct a first access network device to communicate with the second access network device or with a terminal device in a target subframe, wherein the target subframe comprises a first subframe;
**characterized by** sending (220), by the second access network device, the indication message to the first access network device in a first time segment of the first subframe, wherein the indication message is used to instruct the first access network device to communicate with the second access network device or with a terminal device in a second time segment of the first subframe.

7. The method according to claim 6, wherein the sending (220), by the second access network device, the indication message to the first access network device in a first time segment of the first subframe comprises:
sending, by the second access network device in the first time segment, physical layer control signaling sent by the first access network device, wherein the physical layer control signaling comprises the indication message.

8. The method according to claim 6 or 7, wherein the first subframe further comprises a third time segment, and the third time segment is between the first time segment and the second time segment and is used to switch the first access network device from a receiving state to a sending state and, optionally,
wherein the second time segment comprises a control region and a data region, the first access network device sends control information to the terminal device in the control region, and the control information is used to instruct the terminal device to receive data information.

9. A communications apparatus (300), comprising:
a receiving unit (310) and a processing unit (320), wherein the receiving unit (310) is configured to receive an indication message sent by a second access network device, wherein the indication message is used to instruct the processing unit (320) to communicate with the second access network device or with a terminal device in a target subframe, the target subframe comprises a first subframe; and
communicating, by the processing unit, with the second access network device or with the terminal device in the target subframe based on the indication message,
**characterized in that**
the receiving unit (310) is configured to receive the indication message sent by the second access network device in a first time segment of the first subframe wherein the indication message is used to instruct the first access network device to communicate with the second access network device or with a terminal device in a second time segment of the first subframe, wherein the first time segment of the first subframe precedes the second time segment of the first subframe.

10. A communications apparatus (500), comprising:
a processing unit (510) and a sending unit (520), wherein the processing unit (510) is configured to determine an indication message, wherein the indication message is used to instruct a first access network device to communicate with a second access network device or with a terminal device in a target subframe, the target subframe comprises a first subframe; **characterized in that**
the sending unit (520) is configured to send the indication message to the first access network device in a first time segment of the first subframe, wherein the indication message is used to instruct the first access network device to communicate with the second access network device or with a terminal device in a second time segment of the first subframe, wherein the first time segment of the first subframe precedes the second time segment of the first subframe.

11. A readable storage medium, wherein the readable storage medium stores a program, and when the program is executed, the steps of the method according to any one of claims 1 to 8 are performed.

## Patentansprüche

1. Kommunikationsverfahren, Folgendes umfassend:
Empfangen (220), durch eine erste Zugangsnetzwerkvorrichtung, einer durch eine zweite Zugangsnetzwerkvorrichtung gesendeten Anzeigemeldung, wobei die Anzeigemeldung verwendet wird, um die erste Zugangsnetzwerkvorrichtung anzuweisen, mit der zweiten Zugangsnetzwerkvorrichtung oder mit einem Endgerät in einem Zielunterrahmen zu kommunizieren, wobei der Zielunterrahmen einen ersten Unterrahmen umfasst; und
Kommunizieren (230), durch die erste Zugangsnetzwerkvorrichtung, mit der zweiten Zugangsnetzwerkvorrichtung oder mit dem Endgerät in dem Zielunterrahmen basierend auf der Anzeigemeldung,
**dadurch gekennzeichnet, dass**
die durch die zweite Zugangsnetzwerkvorrichtung gesendete Anzeigemeldung von der ersten Zugangsnetzwerkvorrichtung in einem ersten Zeitsegment des ersten Unterrahmens empfangen wird, wobei die Anzeigemeldung verwendet wird, um die erste Zugangsnetzwerkvorrichtung anzuweisen, mit der zweiten Zugangsnetzwerkvorrichtung oder mit einem Endgerät in einem zweiten Zeitsegment des ersten Unterrahmens zu kommunizieren, wobei das erste Zeitsegment des ersten Unterrahmens dem zweiten Zeitsegment des ersten Unterrahmens vorausgeht.

2. Verfahren nach Anspruch 1, wobei das Empfangen (220), durch eine erste Zugangsnetzwerkvorrichtung, einer von einer zweiten Zugangsnetzwerkvorrichtung gesendeten Anzeigemeldung Folgendes umfasst:
Empfangen, durch die erste Zugangsnetzwerkvorrichtung, einer durch die zweite Zugangsnetzwerkvorrichtung gesendeten Steuersignalisierung der physikalischen Schicht in dem ersten Zeitsegment, wobei die Steuersignalisierung der physikalischen Schicht die Anzeigemeldung umfasst.

3. Verfahren nach Anspruch 1 oder 2, wobei der erste Unterrahmen ferner ein drittes Zeitsegment umfasst und das dritte Zeitsegment zwischen dem ersten Zeitsegment und dem zweiten Zeitsegment liegt und verwendet wird, um die erste Zugangsnetzwerkvorrichtung aus einem Empfangszustand in einen Sendezustand zu schalten und gegebenenfalls, wobei das zweite Zeitsegment einen Steuerbereich und einen Datenbereich umfasst, wobei die erste Zugangsnetzwerkvorrichtung Steuerinformationen an das Endgerät in dem Steuerbereich sendet und die Steuerinformationen verwendet werden, um das Endgerät anzuweisen, Dateninformationen zu empfangen.

4. Verfahren nach einem der Ansprüche 1, 2 und 3, wobei die Anzeigemeldung verwendet wird, um die erste Zugangsnetzwerkvorrichtung anzuweisen, in dem Zielunterrahmen Informationen an die zweite Zugangsnetzwerkvorrichtung zu senden oder, in dem Zielunterrahmen, von der zweiten Zugangsnetzwerkvorrichtung gesendete Informationen zu empfangen.

5. Verfahren nach einem der Ansprüche 1 bis 4, wobei das Verfahren vor dem Empfangen, durch eine erste Zugangsnetzwerkvorrichtung in einem ersten Zeitsegment eines ersten Unterrahmens, einer von einer zweiten Zugangsnetzwerkvorrichtung gesendeten Anzeigemeldung ferner Folgendes umfasst:
Bestimmen von Standortinformationen des ersten Unterrahmens und/oder Symbolinformationen des ersten Zeitsegments durch die erste Zugangsnetzwerkvorrichtung.

6. Kommunikationsverfahren, Folgendes umfassend:
Bestimmen (210) einer Anzeigemeldung durch eine zweite Zugangsnetzwerkvorrichtung, wobei die Anzeigemeldung verwendet wird, um eine erste Zugangsnetzwerkvorrichtung anzuweisen, mit der zweiten Zugangsnetzwerkvorrichtung oder mit einem Endgerät in einem Zielunterrahmen zu kommunizieren, wobei der Zielunterrahmen einen ersten Unterrahmen umfasst;
**gekennzeichnet durch** Senden (220), durch die zweite Zugangsnetzwerkvorrichtung, der Anzeigemeldung an die erste Zugangsnetzwerkvorrichtung in einem ersten Zeitsegment des ersten Unterrahmens, wobei die Anzeigemeldung verwendet wird, um die erste Zugangsnetzwerkvorrichtung anzuweisen, mit der zweiten Zugangsnetzwerkvorrichtung oder mit einem Endgerät in einem zweiten Zeitsegment des ersten Unterrahmens zu kommunizieren.

7. Verfahren nach Anspruch 6, wobei das Senden (220), durch die zweite Zugangsnetzwerkvorrichtung, der Anzeigemeldung an die erste Zugangsnetzwerkvorrichtung in einem ersten Zeitsegment des ersten Unterrahmens Folgendes umfasst:
Senden, durch die zweite Zugangsnetzwerkvorrichtung im ersten Zeitsegment, einer durch die erste Zugangsnetzwerkvorrichtung gesendeten Steuersignalisierung der physikalischen Schicht, wobei die Steuersignalisierung der physikalischen Schicht die Anzeigemeldung umfasst.

8. Verfahren nach Anspruch 6 oder 7, wobei der erste Unterrahmen ferner ein drittes Zeitsegment umfasst und das dritte Zeitsegment zwischen dem ersten Zeitsegment und dem zweiten Zeitsegment liegt und verwendet wird, um die erste Zugangsnetzwerkvorrichtung aus einem Empfangszustand in einen Sendezustand zu schalten und gegebenenfalls,
wobei das zweite Zeitsegment einen Steuerbereich und einen Datenbereich umfasst, wobei die erste Zugangsnetzwerkvorrichtung Steuerinformationen an das Endgerät in dem Steuerbereich sendet und die Steuerinformationen verwendet werden, um das Endgerät anzuweisen, Dateninformationen zu empfangen.

9. Kommunikationseinrichtung (300), Folgendes umfassend:
eine Empfangseinheit (310) und eine Verarbeitungseinheit (320), wobei die Empfangseinheit (310) konfiguriert ist, um eine durch eine zweite Zugangsnetzwerkvorrichtung gesendete Anzeigemeldung zu empfangen, wobei die Anzeigemeldung verwendet wird, um die Verarbeitungseinheit (320) anzuweisen, mit der zweiten Zugangsnetzwerkvorrichtung oder mit einem Endgerät in einem Zielunterrahmen zu kommunizieren, wobei der Zielunterrahmen einen ersten Unterrahmen umfasst; und
Kommunizieren, durch die Verarbeitungseinheit, mit der zweiten Zugangsnetzwerkvorrichtung oder mit dem Endgerät in dem Zielunterrahmen basierend auf der Anzeigemeldung,
**dadurch gekennzeichnet, dass**
die Empfangseinheit (310) konfiguriert ist, um die durch die zweite Zugangsnetzwerkvorrichtung gesendete Anzeigemeldung in einem ersten Zeitsegment des ersten Unterrahmens zu empfangen, wobei die Anzeigemeldung verwendet wird, um die erste Zugangsnetzwerkvorrichtung anzuweisen, mit der zweiten Zugangsnetzwerkvorrichtung oder mit einem Endgerät in einem zweiten Zeitsegment des ersten Unterrahmens zu kommunizieren, wobei das erste Zeitsegment des ersten Unterrahmens dem zweiten Zeitsegment des ersten Unterrahmens vorausgeht.

10. Kommunikationseinrichtung (500), Folgendes umfassend:
eine Verarbeitungseinheit (510) und eine Sendeeinheit (520), wobei die Verarbeitungseinheit (510) konfiguriert ist, um eine Anzeigemeldung zu bestimmen, wobei die Anzeigemeldung verwendet wird, um eine erste Zugangsnetzwerkvorrichtung anzuweisen, mit einer zweiten Zugangsnetzwerkvorrichtung oder mit einem Endgerät in einem Zielunterrahmen zu kommunizieren, wobei der Zielunterrahmen einen ersten Unterrahmen umfasst; **dadurch gekennzeichnet, dass**
die Sendeeinheit (520) konfiguriert ist, um die Anzeigemeldung in einem ersten Zeitsegment des ersten Unterrahmens an die erste Zugangsnetzwerkvorrichtung zu senden, wobei die Anzeigemeldung verwendet wird, um die erste Zugangsnetzwerkvorrichtung anzuweisen, mit der zweiten Zugangsnetzwerkvorrichtung oder mit einem Endgerät in einem zweiten Zeitsegment des ersten Unterrahmens zu kommunizieren, wobei das erste Zeitsegment des ersten Unterrahmens dem zweiten Zeitsegment des ersten Unterrahmens vorausgeht.

11. Lesbares Speichermedium, wobei das lesbare Speichermedium ein Programm speichert, und wobei, wenn das Programm ausgeführt wird, die Schritte des Verfahrens nach einem der Ansprüche 1 bis 8 durchgeführt werden.

## Revendications

1. Procédé de communication, comprenant :
la réception (220), par un premier dispositif de réseau d'accès, d'un message d'indication envoyé par un second dispositif de réseau d'accès, le message d'indication étant utilisé pour ordonner au premier dispositif de réseau d'accès de communiquer avec le second dispositif de réseau d'accès ou avec un dispositif terminal dans une sous-trame cible, la sous-trame cible comprenant une première sous-trame ; et
la communication (230), par le premier dispositif de réseau d'accès, avec le second dispositif de réseau d'accès ou avec le dispositif terminal dans la sous-trame cible sur la base du message d'indication,
**caractérisé en ce que**
le message d'indication envoyé par le second dispositif de réseau d'accès est reçu par le premier dispositif de réseau d'accès dans un premier segment de temps de la première sous-trame, le message d'indication étant utilisé pour ordonner au premier dispositif de réseau d'accès de communiquer avec le second dispositif de réseau d'accès ou avec un dispositif terminal dans un deuxième segment de temps de la première sous-trame, le premier segment de temps de la première sous-trame précédant le deuxième segment de temps de la première sous-trame.

2. Procédé selon la revendication 1, dans lequel la réception (220), par un premier dispositif de réseau d'accès, d'un message d'indication envoyé par un second dispositif de réseau d'accès comprend :
la réception, par le premier dispositif de réseau d'accès dans le premier segment de temps, d'une signalisation de commande de couche physique envoyée par le second dispositif de réseau d'accès, la signalisation de commande de couche physique comprenant le message d'indication.

3. Procédé selon la revendication 1 ou 2, dans lequel la première sous-trame comprend en outre un troisième segment de temps, et le troisième segment de temps est entre le premier segment de temps et le deuxième segment de temps, et est utilisé pour commuter le premier dispositif de réseau d'accès d'un état de réception à un état d'envoi et, éventuellement,
le deuxième segment de temps comprenant une région de commande et une région de données, le premier dispositif de réseau d'accès envoyant des informations de commande au dispositif terminal dans la région de commande, et les informations de commande étant utilisées pour ordonner au dispositif terminal de recevoir des informations de données.

4. Procédé selon l'une quelconque des revendications 1, 2 et 3, dans lequel le message d'indication est utilisé pour ordonner au premier dispositif de réseau d'accès d'envoyer, dans la sous-trame cible, des informations au second dispositif de réseau d'accès ou pour recevoir, dans la sous-trame cible, des informations envoyées par le second dispositif de réseau d'accès.

5. Procédé selon l'une quelconque des revendications 1 à 4, dans lequel le procédé comprend en outre, avant la réception, par un premier dispositif de réseau d'accès dans un premier segment de temps d'une première sous-trame, d'un message d'indication envoyé par un second dispositif de réseau d'accès :
la détermination, par le premier dispositif de réseau d'accès, d'informations de localisation de la première sous-trame et/ou d'informations de symbole du premier segment de temps.

6. Procédé de communication, comprenant :
la détermination (210), par un second dispositif de réseau d'accès, d'un message d'indication, le message d'indication étant utilisé pour ordonner au premier dispositif de réseau d'accès de communiquer avec le second dispositif de réseau d'accès ou avec un dispositif terminal dans une sous-trame cible, la sous-trame cible comprenant une première sous-trame ;
**caractérisé par** l'envoi (220), par le second dispositif de réseau d'accès, du message d'indication au premier dispositif de réseau d'accès dans un premier segment de temps de la première sous-trame, le message d'indication étant utilisé pour ordonner au premier dispositif de réseau d'accès de communiquer avec le second dispositif de réseau d'accès ou avec un dispositif terminal dans un deuxième segment de temps de la première sous-trame.

7. Procédé selon la revendication 6, dans lequel l'envoi (220), par le second dispositif de réseau d'accès, du message d'indication au premier dispositif de réseau d'accès dans un premier segment de temps de la première sous-trame comprend :
l'envoi, par le second dispositif de réseau d'accès dans le premier segment de temps, d'une signalisation de commande de couche physique envoyée par le premier dispositif de réseau d'accès, la signalisation de commande de couche physique comprenant le message d'indication.

8. Procédé selon la revendication 6 ou 7, dans lequel la première sous-trame comprend en outre un troisième segment de temps, et le troisième segment de temps est entre le premier segment de temps et le deuxième segment de temps, et est utilisé pour commuter le premier dispositif de réseau d'accès d'un état de réception à un état d'envoi et, éventuellement,
dans lequel le deuxième segment de temps comprend une région de commande et une région de données, le premier dispositif de réseau d'accès envoie des informations de commande au dispositif terminal dans la région de commande, et les informations de commande sont utilisées pour ordonner au dispositif terminal de recevoir des informations de données.

9. Appareil de communication (300), comprenant :
une unité de réception (310) et une unité de traitement (320), l'unité de réception (310) étant configurée pour recevoir un message d'indication envoyé par un second dispositif de réseau d'accès, le message d'indication étant utilisé pour ordonner à l'unité de traitement (320) de communiquer avec le second dispositif de réseau d'accès ou avec un dispositif terminal dans une sous-trame cible, la sous-trame cible comprenant une première sous-trame ; et
la communication, par l'unité de traitement, avec le second dispositif de réseau d'accès ou avec le dispositif terminal dans la sous-trame cible sur la base du message d'indication,
**caractérisé en ce que**
l'unité de réception (310) est configurée pour recevoir le message d'indication envoyé par le second dispositif de réseau d'accès dans un premier segment de temps de la première sous-trame, le message d'indication étant utilisé pour ordonner au premier dispositif de réseau d'accès de communiquer avec le second dispositif de réseau d'accès ou avec un dispositif terminal dans un deuxième segment de temps de la première sous-trame, le premier segment de temps de la première sous-trame précédant le deuxième segment de temps de la première sous-trame.

10. Appareil de communication (500), comprenant :
une unité de traitement (510) et une unité d'envoi (520), l'unité de traitement (510) étant configurée pour déterminer un message d'indication, le message d'indication étant utilisé pour ordonner à un premier dispositif de réseau d'accès de communiquer avec un second dispositif de réseau d'accès ou avec un dispositif terminal dans une sous-trame cible, la sous-trame cible comprenant une première sous-trame ;
**caractérisé en ce que**
l'unité d'envoi (520) est configurée pour envoyer le message d'indication au premier dispositif de réseau d'accès dans un premier segment de temps de la première sous-trame, le message d'indication étant utilisé pour ordonner au premier dispositif de réseau d'accès de communiquer avec le second dispositif de réseau d'accès ou avec un dispositif terminal dans un deuxième segment de temps de la première sous-trame, le premier segment de temps de la première sous-trame précédant le deuxième segment de temps de la première sous-trame.

11. Support de stockage lisible, le support de stockage lisible stockant un programme, et lorsque le programme est exécuté, les étapes du procédé selon l'une quelconque des revendications 1 à 8 sont réalisées.
